# EUROPÄISCHE PATENTSCHRIFT

(11) **EP 0 720 553 B1**
(45) Veröffentlichungstag und Bekanntmachung des Hinweises auf die Patenterteilung: **28.07.1999**
(21) Anmeldenummer: 94928802.1
(22) Anmeldetag: 23.09.1994
(51) Int. Cl.: B60T 8/36, B60T 8/50

(54) **HYDRAULISCHE BREMSANLAGE MIT SCHLUPFREGELUNG**
HYDRAULIC BRAKING SYSTEM WITH SKID CONTROL
SYSTEME HYDRAULIQUE DE FREINAGE A ANTI-PATINAGE

(30) Priorität: 28.09.1993 DE 4332820
(43) Veröffentlichungstag der Anmeldung: 10.07.1996
(73) Patentinhaber: Continental Teves AG & Co. oHG, 60488 Frankfurt (DE)
(72) Erfinder: RAUSCH, Jürgen, D-65760 Eschborn (DE)
(86) Internationale Anmeldenummer: EP9403183
(87) Internationale Veröffentlichungsnummer: WO9509098

(56) Entgegenhaltungen:
- EP-A- 0 317 305
- EP-A- 0 423 755
- WO-A-91/18774
- DE-A- 3 427 802
- FR-A- 2 680 742
- GB-A- 2 252 140

## Beschreibung

Die Erfindung betrifft eine hydraulische Bremsanlage mit Schlupfregelung nach dem Oberbegriff des Anspruchs 1. Solche Bremsanlage sind bekannt, siehe beispielsweise DE-A-4 319 227, GB-A-2 252 140, EP-A-0 317 305 oder WO-A-9 118 774 (Fig. 4).

Die diskontinuierliche Druckmittelsteuerung bei schlupfgeregelten Bremsanlagen mittels digital schaltbaren Einlaß- und Auslaßventilen führt infolge des impulsartigen Druckverlaufs zur unerwünschten Schallemission.

Bei der in der nicht veröffntlichten DE-A-4319227 beschriebenen Bremsanlage hat es sich gezeigt, daß die vorgeschlagenen konstruktiven Lösungen zur Anordnung des mit der schaltbaren Blende versehenen Ringkolbens sowie die mit dem Ringkolben korrespondierenden Einzelheiten im Einlaßmagnetventil einer weiteren baulichen Vereinfachung bedürfen, um eine möglichst einfach bauende und miniaturisierte Ausführung des Einlaßventils zu erhalten.

Aus der EP-A-0317305 ist bereits ein Elektromagnetventil bekannt geworden, das zur Verwendung für blockiergeschützte hydraulische Bremsanlagen geeignet ist. Das Elektromagnetventil ist mit einem eine Spule aufnehmenden Magnetkern versehen, der auf der einen Seite von einem Magnetanker und auf der anderen Seite von einem Membrankörper begrenzt ist, wobei der Membrankörper einen Durchlaß aufweist, der von einer Ventilnadel verschließbar ist. Der Membrankörper ist axial beweglich zwischen dem Magnetkern und einem den Druckmitteleinlaß aufweisenden Gehäusedeckel eingespannt, so daß in der den Zulaufkanal im Membrankörper verschließenden Schaltstellung der Ventilnadel beiderseits des Membrankörpers eine Druckdifferenz wirksam ist, die zu einer Relativverschiebung der Ventilnadel gegenüber dem Magnetanker führt. Hierdurch ist eine zwischen der Ventilnadel und dem Magnetanker angeordnete Druckfeder vorgespannt. Die durch die Druckdifferenz am Membrankörper verursachte Druckfeder-Vorspannkraft führt bei einer Unterbrechung der elektromagnetischen Erregung zu einem raschen Lösen des Magnetankers vom Magnetkern. Dies führt zu kleinen Ventilöffnungszeiten. Eine auf die Ventilnadel im Öffnungssinne wirksame Federrückstellkraft begünstigt die schnelle Freigabe des Zulaufkanals im Membrankörper, so daß Druckmittel nach dem Passieren des freien Durchgangs an der Ventilnadel zu einem Ringspalt gelangt, der zwischen der hohlzylinderförmigen Innenwandung des Magnetkerns und der Außenwandung eines die Ventilnadel führenden Zylinderteils gebildet ist. Das somit vom Ventileinlaß kommende Fluid gelangt über den Zulaufkanal im Membrankörper und dem nachgeordneten Ringspalt in eine zum Druckmittelverbraucher führende Druckmittelverbindung.

Es ist die Aufgabe der Erfindung, unter Beibehaltung eines unveränderten schaltungstechnischen Aufbaus der gattungsbildenden Bremsanlage, Lösungsvorschläge zur Miniaturisierung des Einlaßventils aufzuzeigen, die ohne Einschränkung der Funktionsfähigkeit kostengünstig zu realisieren sind.

Diese Aufgabe wird erfindungsgemäß durch die kennzeichnenden Merkmale des Patentanspruchs 1 gelöst. innerhalb eines Ringraums, konzentrisch zum Ventilschließglied des Einlaßventils geführt ist.

Hierdurch dient gleichzeitig der ursprünglich einen Ringfilter und das Ventilschließglied aufnehmende Ringraum vorteilhaft zur Integration des Ringkolbens, womit die Außenmaße des Ventilträgers und die Maße der Stufenbohrung des Ventilaufnahmekörpers beibehalten werden können. Ferner kann der Ringbereich zwischen dem Ventilaufnahmekörper und dem Ventilträger zur Anordnung des Ringfilters verwendet werden, wodurch sich eine vorteilhafte Vergrößerung der Filterfläche zur Filtrierung der u.a. auch zwischen der Radbremse und der Rückschlagmanschette strömenden Flüssigkeit ergibt.

Weitere Merkmale, Vorteile und Anwendungsmöglichkeiten der Erfindung gehen aus der nachfolgenden Beschreibung mehrerer Ausführungsbeispiele hervor.

Es zeigen:
- Figur 1: eine Teilansicht eines Einlaßventils in vergrößerter Darstellung, mit der erfindungsgemäßen Anordnung des Ringkolbens im Bereich des Ventilschließgliedes,
- Figur 2: eine weitere alternative Ausführungsform von Einzelheiten innerhalb eines Einlaßventils,
- Figur 3: einen Querschnitt an der Stelle A-A des Ventilträgers im vergrößerten Maßstab.

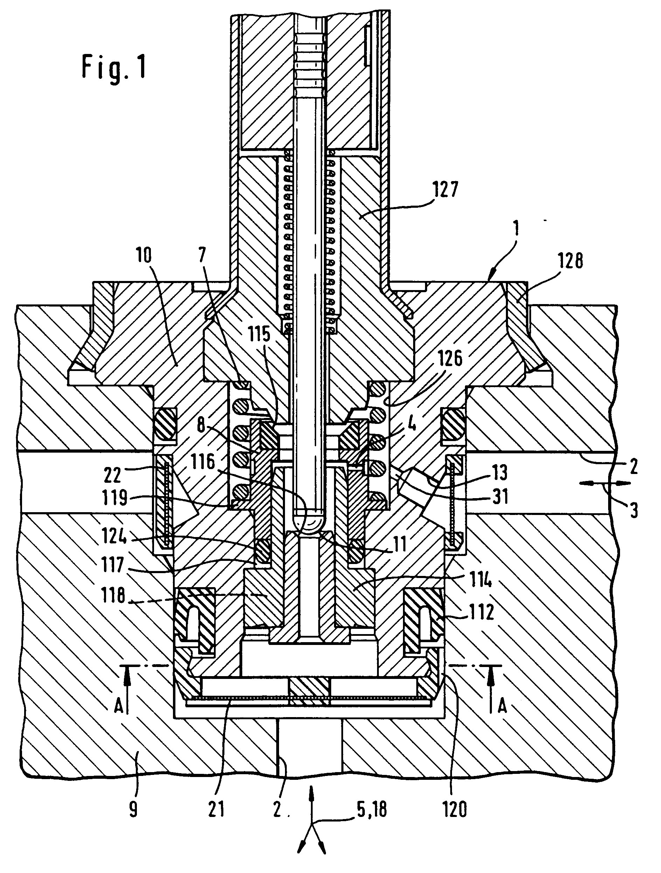

Die Figur 1 zeigt ein konstruktives Ausführungsbeispiel zum Gesamtaufbau des Einlaßventils 1. Das Einlaßventil 1 weist einen Ventilträger 10 auf, der das Ventilschließglied 11 und die Kanalführung der vom Bremsdruckgeber 5 und der Hilfsdruckpumpe 18 kommenden Hauptdruckleitung 2 beinhaltet. Der Ventilträger 10 ist vorzugsweise in Patronenbauweise (Einschraubpatrone, Verstemmpatrone, Patrone mit Spreizring) in einem Ventilaufnahmekörper 9 integriert. In der gewählten Darstellung des Ventilbefestigungssystems ist der Ventilträger 10 im konisch verjüngten Außenbereich mit einem Spreizring 128 im Ventilaufnahmekörper 9 befestigt, dessen Öffnung zur Aufnahme des Spreizrings 128 mit einer konischen Hinterschneidung versehen ist. Die Abdichtung des Ventilträgers 10 im Ventilaufnahmekörper 9 ist durch eine unterhalb des konisch geformten Ventilträgers 10 angeordnete Dichtung gewährleistet. Es besteht eine Druckmittelverbindung der Hauptdruckleitung 2, die am Bremsdruckgeber 5 und der Hilfsdruckpumpe 18 angeschlossen ist, durch einen am Fortsatz des Ventilträgers 10 aufgeclipsten Plattenfilter 21 und über das in der Grundstellung offengeschaltete Ventilschließglied 11 zum Ringkolben 8. Von dort gelangt Druckmittel über den offenen Ringspalt am Magnetkern 127 sowie auch im geringen Umfang über die Blende 4 zu einer im Ventilträger 10 eingearbeiteten Festblende 31, die zum Zwecke der Verbesserung der ABS-Regelgüte verwendet wird, in Richtung des dem Anschluß zur Radbremse 3 vorgeschalteten Ringfilters 22.

Der Ringkolben 8 übernimmt infolge einer Querbohrung in der Ringkolbenwandung die schaltbare Blendenfunktion. Dieser ist auf dem im Durchmesser verkleinerten Fortsatz des den Ventilsitz 116 aufweisenden rotationssymmetrischen Zentralkörpers 114 im Ringraum 126 axial beweglich geführt. Der Ringkolben 8 stützt sich unter Wirkung einer Druckfeder 7 mit seinem als Anschlag wirksamen äußeren Bund 119 an der Bohrungsstufe des Ringraums 126 im Ventilträger 10 ab. Der Ringkolben 8 weist im wesentlichen die Form einer Hülse auf, die an ihrer dem Magnetkern 127 zugewandten Stirnfläche mit einem trichterförmigen Gummidichtsitz 115 versehen ist, der dem kegelförmig gestalteten Stirnbereich des Magnetkerns 127 gegenüberliegt. Bei Wunsch oder Bedarf kann die Kegelabdichtung auch als metallische Flachdichtung oder mit einem im Stirnflächenbereich des Ringkolben 8 eingefaßten O-Ring ausgeführt sein.

Auf der zum Magnetkern 127 abgewandten Stirnseite des Ringkolbens 8 befindet sich ein Dichtring 124, der in der Schließstellung des Einlaßventils 1 ein Überströmen von Druckmittel vom Bremsdruckgeber 5 in Richtung der Radbremse 3 verhindert. Der sich mit seinem Fortsatz in den Innenraum erstreckende rotationssymmetrische Zentralkörper 114 ist in die Stufenbohrung des Ventilträgers 10 eingepreßt und ggf. im Stirnflächenbereich verstemmt. In der gezeigten Ausführungsform ist der Ventilsitz 116 als gestuftes Hülsenteil in die koaxial zum Ventilschließglied 11 verlaufende Bohrung des Zentralkörpers 114 eingepreßt.

Eine am Außenumfang des Ventilträgers 10 auf Höhe des Zentralkörpers 114 gelegene Ringnut nimmt eine in Richtung der Radbremse 3 sperrende Dichtmanschette 112 auf, die über einen zwischen dem Ventilträger 10 und dem Ventilaufnahmekörper 9 beabstandeten Ringfilter 22 sowie mittels wenigstens einer in der Abbildung erkennbaren seitlichen Ausnehmung 120 am Plattenfilter 21 eine die Flüssigkeit filtrierende Druckmittelverbindung zwischen der Radbremse 3 und dem Bremsdruckgeber 5, bzw. der Hilfsdruckpumpe 18, ermöglicht.

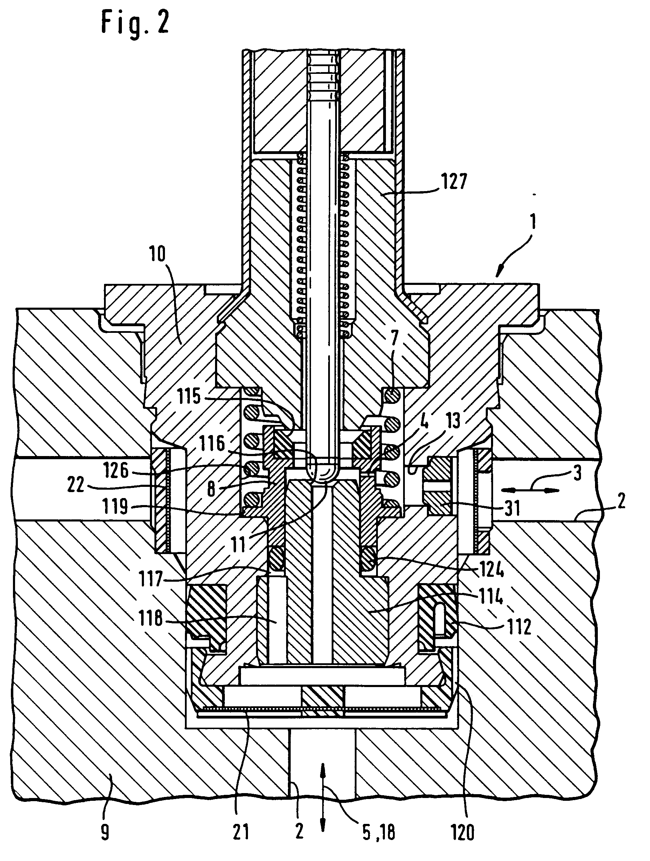

Die Figur 2 zeigt abweichend von Figur 1 gleichfalls im erheblich vergrößerten Maßstab den Ventilsitz 116 als homogenes Bestandteil im Zentralkörper 114 integriert, so daß die in Figur 1 erläuterte separate Anordnung eines den Ventilsitz 116 aufweisenden weiteren hülsenförmigen Einpreßteils entfällt. Zur Druckbeaufschlagung des am Ringkolben 8 angeordneten Dichtrings 124 ist lediglich ein Durchbruch 118 im Zentralkörper 114 vorgesehen, der entsprechend groß dimensioniert ist und als eine Bohrung kostengünstig hergestellt werden kann. Zur Feinabstimmung der Durchflußmenge zur Radbremse 3 im ABS-Betrieb, ist zusätzlich im Ventilträger 10 eine Festblende 31 als Einsatzteil in die den Ringraum 126 mit der Radbremse 3 hydraulisch verbindenden Querbohrung 13 des Ventilträgers 10 eingepreßt, wobei bei Bedarf, entsprechend der Darstellung in Figur 1, auch durch kalibriertes Feinbohren der Querbohrung die Funktion der Festblende möglich ist. Der Ventilträger 10 ist mittels einer im Ventilaufnahmekörper 9 selbsteinscherenden Befestigung gehalten, so daß auf den aus Figur 1 bekannten Dichtring verzichtet werden kann.

Alle aus der bildlichen Darstellung von Figur 2 ersichtlichen weiteren Elemente entsprechen im wesentlichen dem Aufbau und der Funktion nach Figur 1.

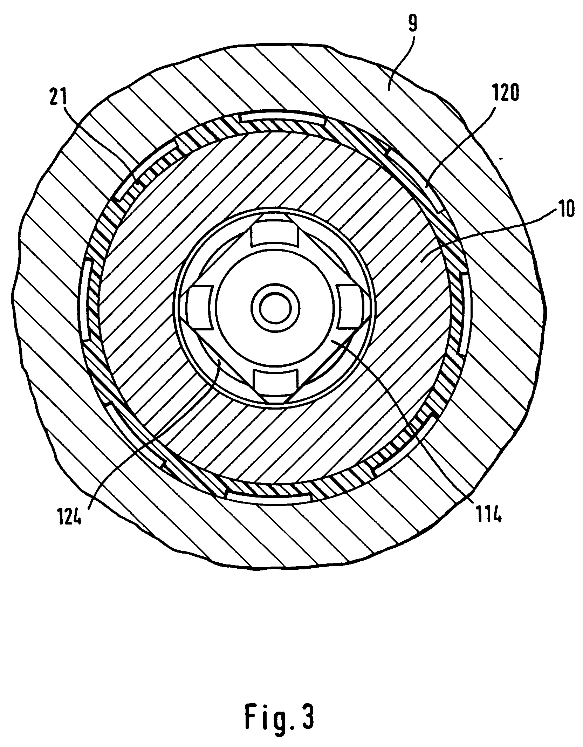

Die Figur 3 zeigt eine Draufsicht auf das in Figur 1 dargestellte Einlaßventil 1 an der Schnittstelle A-A, woraus hervorgeht, daß der Zentralkörper 114 durch die Ausführung als Vierkantprofil gegenüber der Innenwandung des Ventilträgers 10 entsprechend große Druckmitteldurchlässe in Richtung des dem Ringkolben 8 vorgeordneten Dichtrings 124 aufweist. Die Schnittebene durchdringt den unteren Endabschnitt des Ventilträgers 10, an dem der Plattenfilter 21 aufgeclipst ist. Der Plattenfilter 21 weist über den Umfang verteilt mehrere Ausnehmungen 120 auf, die den Druckmitteldurchlaß aus Richtung der Dichtmanschette 112 ermöglichen. Alle zur Schnittebene A-A beschriebenen Elemente befinden sich somit zueinander in einer rotationssymmetrischen koaxialen Anordnung.

Nachfolgend wird die Funktionsweise der Erfindung erläutert:

Während einer nicht geregelten, schlupffreien Normalbremsphase befindet sich das Einlaßventil 1 in der elektromagnetisch nicht erregten offenen Grundstellung. Bei der Betätigung des Bremsdruckgebers 5 entsteht kein Staudruck im Ventileingang des Einlaßventils 1, da der Ventilsitz 116 keine maßgebliche Drossel- bzw. Blendenwirkung verursacht, wodurch auch keine nennenswerte Druckdifferenz zwischen dem Ventileingang und Ventilausgang entsteht. Der Ringkolben 8 bleibt in der abbildungsgemäßen Ausgangsstellung an der Bohrungsstufe auf Anschlag, so daß der Bremsdruck über den Ventilsitz 116 sowie über den Ringspalt zwischen dem Ringkolben 8 und dem Magnetkern 127 auf die Radbremse 3 wirken kann.

Beim Lösen des Bremspedals wird der Bremsdruck in umgekehrter Richtung über das offene Ventilschließglied 11 und über die Dichtmanschette 112 in Richtung des Bremsdruckgebers 5 wieder abgebaut.

Überschreitet bei geschlossenem Einlaßventil 1 während einer Bremsschlupfregelung die Druckdifferenz zwischen dem Ventileinlaß (Hauptzylinder-/Pumpendruck) und Ventilausgang (Radbremsdruck) einen durch die Druckfeder 7 eingestellten Wert, so wird der Ringkolben 8 infolge der resultierenden Druckkraft am Dichtring 124 gegen die Federkraft verschoben und kommt am Magnetkern 127 dichtend zur Anlage. Eine Druckmittelverbindung zur Radbremse 3 besteht dann ausschließlich über die Blende 4 des Ringkolbens 8. Öffnet das Einlaßventil 1 wieder seinen regulären Durchgang über das Ventilschließglied 11, so gelangt das von der in Betrieb befindlichen Hilfsdruckpumpe 18 nachströmende Fluid ausschließlich über die Blende 4 im Ringkolben 8 zur Radbremse und wird derart abgebremst, daß beim nachfolgenden wiederholten Schließen des Einlaßventils 1 der Druckstoß und damit das Geräusch reduziert ist. Beim Unterschreiten der zur Betätigung des Ringkolbens 8 notwendigen Schaltdruckdifferenz sowie beim Unterbrechen des Bremsvorgangs gelangt der Ringkolben 8 in die den Strömungsdurchlaß vergrößernde Ausgangsstellung zurück.

### Bezugszeichenliste

- 1: Einlaßventil
- 2: Hauptdruckleitung
- 3: Radbremse
- 4: Blende
- 5: Bremsdruckgeber
- 7: Druckfeder
- 8: Ringkolben
- 9: Ventilaufnahmekörper
- 10: Ventilträger
- 11: Ventilschließglied
- 13: Querbohrung
- 21: Plattenfilter
- 22: Ringfilter
- 31: Festblende
- 112: Dichtmanschette
- 114: Zentralkörper
- 115: Dichtsitz
- 116: Ventilsitz
- 117: Zwischenraum
- 118: Durchbruch
- 119: Bund
- 120: Ausnehmung
- 124: Dichtring
- 126: Ringraum
- 127: Magnetkern
- 128: Spreizring

## Patentansprüche

1. Hydraulische Bremsanlage mit Schlupfregelung, mit einem Bremsdruckgeber (5), der über eine Hauptdruckleitung (2) mit wenigstens einer Radbremse (3) hydraulisch in Verbindung steht, mit einer an der Radbremse (3) angeschlossenen Rücklaufleitung, die mit einem Druckmittelsammler in Verbindung steht, mit einer Hilfsdruckpumpe, die eine Hilfsdruckleitung aufweist und die mit dem Bremsdruckgeber (5) hydraulisch verbunden ist, sowie mit in der Hauptdruckleitung (2) und in der Rücklaufleitung eingesetzten Einlaßventilen (1) und Auslaßventilen, die den Druckmitteldurchlaß in der Hauptdruckleitung (2) und in der Rücklaufleitung entweder sperren oder geöffnet halten, mit einer in der Hauptdruckleitung (2) zwischen dem Einlaßventil (1) und der Radbremse (3) angeordneten schaltbaren Blende (4), die in einer ersten Schaltstellung einen ungehinderten hydraulischen Durchlaß der Hauptdruckleitung (2) zur Radbremse (3) herstellt und die in einer weiteren Schaltstellung den Druckmitteldurchlaß zur Radbremse (3) begrenzt, dadurch **gekennzeichnet**, daß ein die schaltbare Blende (4) aufnehmender Ringkolben (8) innerhalb eines durch einen Ventilträger (10) und einen fest damit verbundenen, in den Innenraum des Ventilträgers (10) hineinragenden Zentralkörper (114) gebildeten Ringraums (126) konzentrisch zum Ventilschließglied (11) des Einlaßventils (1) axial beweglich geführt ist.

2. Hydraulische Bremsanlage nach Anspruch 1, dadurch **gekennzeichnet**, daß der Ringraum (126) als Stufenbohrung ausgebildet ist, die auf der einen Stirnseite vom Magnetkern (127) des Einlaßventils (1) und auf der anderen Stirnseite von dem den Ventilsitz (116) aufnehmenden Zentralkörper (114) begrenzt ist.

3. Hydraulische Bremsanlage nach Anspruch 1 oder 2, dadurch **gekennzeichnet**, daß der Ringkolben (8) zwischen dem den Ventilsitz (116) aufweisenden Zentralkörper (114) und der Wandung des Ringraums (126) geführt ist.

4. Hydraulische Bremsanlage nach mindestens einem der vorhergehenden Ansprüche, dadurch **gekennzeichnet**, daß die dem Magnetkern (127) zugewandte Stirnfläche des Ringkolbens (8) mit einem an der Stirnfläche des Magnetkerns (127) anlegbaren Dichtsitz (115) versehen ist.

5. Hydraulische Bremsanlage nach mindestens einem der vorhergehenden Ansprüche, dadurch **gekennzeichnet**, daß zwischen einer Stirnfläche am Zentralkörper (114) und der dem Zentralkörper (114) zugewandten Stirnfläche des Ringkolbens (8) ein Zwischenraum (117) zur Aufnahme eines Dichtrings (124) vorgesehen ist.

6. Hydraulische Bremsanlage nach mindestens einem der vorhergehenden Ansprüche, dadurch **gekennzeichnet**, daß der Zentralkörper (114) in Richtung seiner Symmetrieachse mit wenigstens einem Durchbruch (118) versehen ist, der eine permanente Druckmittelverbindung zwischen der aus Richtung des Bremsdruckgebers (5) kommenden Hauptdruckleitung (2) und dem den Dichtring (124) aufweisenden Zwischenraum (117) herstellt.

7. Hydraulische Bremsanlage nach einem der vorhergehenden Ansprüche 1 bis 6, dadurch **gekennzeichnet**, daß der Ringkolben (8) einen Bund (119) aufweist, der an der Bohrungsstufe des Ringraums (126) unter Abstützung einer am Magnetkern (127) angebrachten Druckfeder (7) grundpositioniert ist.

## Claims

1. Hydraulic brake system with slip control, including a braking pressure generator (5) which is hydraulically connected to at least one wheel brake (3) by way of a main pressure line (2), a return line connected to the wheel brake (3) and to a pressure fluid collecting means, an auxiliary pressure pump having an auxiliary pressure line and being hydraulically connected to the braking pressure generator (5), and inlet valves (1) and outlet valves inserted in the main pressure line (2) and the return line and either closing or keeping open the pressure fluid passage in the main pressure line (2) and in the return line, a controllable restrictor (4) inserted in the main pressure line (2) between the inlet valve (1) and the wheel brake (3) which establishes an unimpeded hydraulic fluid passage in the main pressure line (2) to the wheel brake (3) in a first switching position and limits the pressure fluid passage to the wheel brake (3) in another switching position,
**characterized** in that an annular piston (8), which accommodates the controllable restrictor (4), is axially movable within an annular chamber (126) concentrically relative to the valve closure member (11) of the inlet valve (1), the said annular chamber (126) being formed by a valve carrier (10) and a central element (114) that is rigidly connected to and projects into the interior of the valve carrier (10).

2. Hydraulic brake system as claimed in claim 1,
**characterized** in that the annular chamber (126) is a stepped bore which is confined by the magnetic core (127) of the inlet valve (1) on one frontal end and by the central element (114) accommodating the valve seat (116) on the other frontal end.

3. Hydraulic brake system as claimed in claim 1 or claim 2,
**characterized** in that the annular piston (8) is guided between the central element (114) including the valve seat (116) and the wall of the annular chamber (126).

4. Hydraulic brake system as claimed in at least one of the preceding claims,
**characterized** in that the front surface of the annular piston (8) close to the magnetic core (127) has a sealing seat (115) that is movable into abutment on the frontal end of the magnetic core (127).

5. Hydraulic brake system as claimed in at least one of the preceding claims,
**characterized** in that an intermediate space (117) to accommodate a sealing ring (124) is provided between a front surface of the central element (114) and the front surface of the annular piston (8) close to the central element (114).

6. Hydraulic brake system as claimed in at least one of the preceding claims,
**characterized** in that the central element (114) has at least one aperture (118) in the direction of its axis of symmetry which establishes a permanent pressure fluid connection between the main pressure line (2) extending from the direction of the braking pressure generator (5) and the intermediate chamber (117) accommodating the sealing ring (124).

7. Hydraulic brake system as claimed in anyone of the preceding claims 1 to 6,
**characterized** in that the annular piston (8) has a collar (119) which is basically positioned on the bore step of the annular chamber (126) and supported on a compression spring (7) mounted on the magnetic core (127).

## Revendications

1. Système de freinage hydraulique à régulation du glissement, comprenant un générateur de pression de freinage (5), qui est en communication hydraulique avec au moins un frein de roue (3) par l'intermédiaire d'une conduite de pression principale (2), une conduite de retour, raccordée au frein de roue (3) et reliée à un accumulateur d'agent de pression, une pompe de pression auxiliaire, comportant une conduite de pression auxiliaire et reliée hydrauliquement au générateur de pression de freinage (5), des valves d'entrée (1) et des valves de sortie, qui sont montées dans la conduite de pression principale (2) et dans la conduite de retour et qui maintiennent soit bloqué, soit ouvert le passage d'agent de pression dans la conduite de pression principale (2) et dans la conduite de retour, et un orifice d'étranglement (4) pouvant être faire l'objet d'une commutation, qui est disposé dans la conduite de pression principale (2) entre la valve d'entrée (1) et le frein de roue (3) et qui, dans une première position de commutation, crée un passage hydraulique sans obstacle de la conduite de pression principale (2) vers le frein de roue (3) et, dans une seconde position de commutation, limite le passage d'agent de pression vers le frein de roue (3), caractérisé en ce qu'un piston annulaire (8) qui porte l'orifice d'étranglement (4) pouvant faire l'objet d'une commutation est guidé de manière à être mobile axialement, de façon à être concentrique à l'obturateur (11) de la valve d'entrée (1), dans une chambre annulaire (126) formée par un support de valve (10) et un corps central (114) fixé à demeure sur le support de valve (10) et faisant saillie dans la cavité du support de valve (10).

2. Système hydraulique de freinage suivant la revendication 1, caractérisé en ce que la chambre annulaire (126) est réalisée sous forme d'un alésage étagé qui est délimité, sur un premier côté frontal, par le noyau d'électro-aimant (127) de la valve d'entrée (1) et, sur l'autre côté frontal, par le corps central 114 portant le siège de valve (116).

3. Système de freinage hydraulique suivant la revendication 1 ou 2, caractérisé en ce que le piston annulaire (8) est guidé entre le corps central (114), qui porte le siège de valve (116), et la paroi de la chambre annulaire (126).

4. Système de freinage hydraulique suivant au moins l'une des revendications précédentes, caractérisé en ce que la surface frontale du piston annulaire (8) qui fait face au noyau d'électro-aimant (127) est pourvue d'un siège d'étanchéité (115) pouvant être appliqué sur la surface frontale du noyau d'électro-aimant (127).

5. Système de freinage hydraulique suivant au moins l'une des revendications précédentes, caractérisé en ce qu'un espace intermédiaire (117) servant à recevoir une bague d'étanchéité (124) est prévu entre une surface frontale située sur le corps central (114) et la surface frontale du piston annulaire (8) qui fait face au corps central (114).

6. Système de freinage hydraulique suivant au moins l'une des revendications précédentes, caractérisé en ce que, suivant la direction de son axe de symétrie, le corps central (114) est pourvu d'au moins un passage (118) qui crée une liaison permanente d'agent de pression entre la conduite de pression principale (2), provenant du générateur de pression de freinage (5), et l'espace intermédiaire (117) comportant la bague d'étanchéité (124).

7. Système de freinage hydraulique suivant l'une des revendications précédentes 1 à 6, caractérisé en ce que le piston annulaire (8) comporte une collerette (119) qui présente un positionnement de base sur l'épaulement d'alésage de la chambre annulaire (126) sous l'effet de l'appui d'un ressort de compression (7) monté sur le noyau d'électro-aimant (127).
